# EUROPÄISCHE PATENTSCHRIFT

(11) **EP 2 441 983 B1**
(45) Veröffentlichungstag und Bekanntmachung des Hinweises auf die Patenterteilung: **19.03.2014**
(21) Anmeldenummer: 11184848.7
(22) Anmeldetag: 12.10.2011
(51) Int. Cl.: F16H 59/04, F16H 61/26

(54) **Schaltungsbauteil, insbesondere für ein Kraftfahrzeug**
Shifting arrangement, in particular for a motor vehicle
ÉLément de passage, en particulier pour un véhicule automobile

(30) Priorität: 18.10.2010 DE 102010038245
(43) Veröffentlichungstag der Anmeldung: 18.04.2012
(73) Patentinhaber: ECS Engineered Control Systems AG, 9015 St. Gallen (CH)
(72) Erfinder: Pätzold, Wolfgang, 35630 Ehringshausen (DE)
(74) Vertreter: Müller, Eckhard

(56) Entgegenhaltungen:
- EP-A1- 2 453 147
- DE-A1- 19 735 290
- DE-A1- 19 817 166
- DE-A1- 19 956 279
- DE-A1-102007 005 496
- DE-C1- 19 540 897
- US-A- 5 560 253

## Beschreibung

Die Erfindung betrifft ein Schaltungsbauteil nach dem Oberbegriff des Anspruchs 1, wie offenbart in der DE 195 40 897 C1.

Aus DE 10 2004 063 661 A1 ist eine Wählhebeleinrichtung und ein Montageverfahren für eine Wählhebeleinrichtung bekannt. Die Wählhebeleinrichtung weist einen Wählhebel und einen Wählwinkel auf, wobei der Wählwinkel und der Wählhebel derart miteinander gekoppelt sind, dass bei einer Betätigung des Wählhebels der Wählwinkel um ein Schwenkgelenk verschwenkt wird. Das Schwenkgelenk enthält einen Lagerbolzen. Die Wählhebeleinrichtung weist eine Montagebasis auf, in der eine Montagebasisbohrung vorgesehen ist, durch welche der Lagerbolzen eingesteckt ist. Der Wählwinkel weist eine Bohrung auf, durch die der Lagerbolzen in eine Zusammenbaustellung verläuft. Bei der Montage wird zunächst der Lagerbolzen von einer Einführseite her in die Montagebasisbohrung eingeführt. Anschließend wird der Wählhebel mit seiner Wählhebelbohrung ebenfalls auf den Lagerbolzen von der anderen Seite, das heißt der der Einführseite des Lagerbolzens gegenüberliegenden Seite der Montagebasis, auf den Lagerbolzen aufgesteckt. Um eine dauerhafte und feste Verbindung zwischen dem Wählhebel und dem Lagerbolzen herzustellen, wird anschließend ein Blindniet aufgesteckt und mit einer Blindnietzange so verformt, dass das verformte Ende des Blindniets in einer Aufnahmeöffnung des Lagerbolzens eine Innenschulter hintergreift.

Die Herstellung dieser Wählhebeleinrichtung ist äußerst aufwendig. Dies insbesondere deshalb, weil der Zeit- und Materialaufwand zur Herstellung einer Blindnietverbindung sehr groß ist. Darüber hinaus erlaubt die aus dem Stand der Technik bekannte Wählhebeleinrichtung keine effiziente und sinnvolle Verwendung von Lagerbolzen und/oder Wählhebeln aus Kunststoff; denn diese müssten zur Herstellung einer sicheren Verbindung zwischen dem Lagerbolzen und dem Wählhebel übermäßig groß dimensioniert sein. Hierdurch würde unter anderem Bauraum verlorengehen.

In DE 199 56 279 A1 wird ein Schaltungsbauteil mit einer Schalthandhabe, einem Übertragungsmittel und einer Montagebasis offenbart. Die Schalthandhabe ist in einer Aufnahme der Montagebasis angeordnet. Eine Lagerung des Übertragungsmittels ist auf einer Oberfläche der Montagebasis angeordnet.

DE 195 40 897 C1 offenbart ein Übertragungsmittel eines Schaltungsbauteils. Das Übertragungsmittel weist eine Ausnehmung auf, in der ein von dem Übertragungsmittel separater Lagerbolzen angeordnet ist. Das Übertragungsmittel ist über den Lagerbolzen mit einem Lagermodul gekoppelt.

DE 10 2007 005 496 A1 offenbart ein Schaltungsbauteil mit einem von einer Montagebasis separaten Lagermodul. Die Schalthandhabe und das Übertragungsmittel sind in dem Lagermodul angeordnet. Das Übertragungsmittel wird über einen separaten Achsbolzen mit dem Lagermodul verbunden.

DE 197 35 290 A1 offenbart eine manuelle Schaltvorrichtung für das Getriebe eines Kraftfahrzeugs. Die Schaltvorrichtung weist einen Schalthebel und einen Schaltblock auf, in den ein unteres kugelförmiges Ende des Schalthebels eingreift. Im Schaltblock ist ein erster Gleitstein vorgesehen, der in einem zweiten Gleitstein geführt wird.

Die US 5 560 253 A offenbart eine Schaltvorrichtung mit einem Übertragungsmittel. Das Übertragungsmittel weist einen Lagerbolzen auf, der von einem Grundkörper vorsteht und einstückig mit diesem verbunden ist.

Es ist daher die Aufgabe der vorliegenden Erfindung, ein Schaltungsbauteil anzugeben, das schneller und kostengünstiger herzustellen ist.

Die Aufgabe wird durch ein Schaltungsbauteil nach Anspruch 1 gelöst. Besondere Ausführungsarten der Erfindung ergeben sich aus den abhängigen Ansprüchen.

Es wurde erkannt, dass ein effizienteres, insbesondere schnelleres und kostengünstigeres Herstellen eines Schaltungsbauteils dadurch ermöglicht wird, dass ein Übertragungsmittel, wie beispielsweise ein Wählwinkel, der sich bei einer Bewegung, insbesondere einer Linearverschiebung, der Schalthandhabe verschwenkt und/oder dreht, in einem eigenen Lagermodul angeordnet wird, um anschließend die so hergestellte Baueinheit, die aus dem Lagermodul und dem Übertragungsmittel gebildet ist, insgesamt auf einfache Weise in und/oder an einer Montagebasis eines Schaltungsbauteils festzulegen.

Die Lösung hat den ganz besonderen Vorteil, dass das Übertragungsmittel samt dem Lagerbolzen einstückig ist. Insbesondere kann in vorteilhafter Weise vorgesehen sein, dass das Übertragungsmittel samt dem Lagerbolzen als einstückiges Kunststoffteil hergestellt wird. Ganz besonders vorteilhafter Weise ist es durch die vorliegende Erfindung ermöglicht, das Übertragungsmittel samt dem Lagerbolzen als einstückiges Spritzgussteil herzustellen.

Die einstückige Herstellung des Lagerbolzens zusammen mit dem Übertragungsmittel ist bei der aus der bereits erwähnten DE 10 2004 063 661 A1 bekannten Wählhebeleinrichtung unmöglich. Dies deshalb, weil der Wählhebel in der Zusammenbaustellung in eine Öffnung der Montagebasis ragt (siehe Fig. 2 der DE 10 2004 063 661 A1). Ein Einbau des Wählhebels wäre bei dieser aus dem Stand der Technik bekannten Wählhebeleinrichtung demgemäß unmöglich, wenn an dem Wählhebel der Lagerbolzen bereits angeformt wäre, weil es aus geometrischen Gründen unmöglich ist, sowohl den Lagerbolzen, als auch den Wählhebel einerseits in die Lagerbolzenbohrung und andererseits in die Öffnung einzubringen. Dies insbesondere deshalb, weil die Einführrichtungen senkrecht zueinander stehen.

Durch die vorliegende Erfindung ist das vorgenannte Problem äußerst elegant gelöst.

Insbesondere kann die separate Baueinheit in äußerst vorteilhafter Weise derart konstruiert werden, dass die Annäherungs- und/oder Einführrichtung zur Befestigung des Lagermoduls in und/oder an der Montagebasis dieselbe Richtung ist wie die, zum Einführen des Übertragungsmittels, insbesondere eines Wählwinkels und/oder eines Schenkels eines Wählwinkels, in eine Öffnung der Montagebasis.

Insbesondere auf diese Weise kann in vorteilhafter Weise erreicht werden, dass das Montieren des separaten Bauteils - trotzdem weitere Randbedingungen, wie das Einführen des Übertragungsmittels in Öffnungen, zu erfüllen sind - äußerst schnell, zuverlässig und effizient erfolgen kann.

Bei einer besonders vorteilhaften Ausführungsform des erfindungsgemäßen Schaltungsbauteils ist vorgesehen, dass das Lagermodul und/oder die Montagebasis Befestigungsmittel, insbesondere Rastmittel und/oder Clipsverbindungen, zum Festlegen des Lagermoduls in und/oder an der Montagebasis aufweisen. Eine Rast- und/oder Clipsverbindung ermöglicht ein äußerst schnelles, effizientes und sicheres Befestigen der separaten Baueinheit an und/oder in der Montagebasis. Es ist jedoch auch denkbar, die separate Baueinheit auf andere Weise, wie beispielsweise durch Verschrauben und/oder durch Verkleben und/oder durch Vernieten und/oder durch Verschweißen und/oder durch Verlöten zu befestigen.

In vorteilhafter Weise kann vorgesehen sein, dass die separate Baueinheit wieder lösbar an und/oder in der Montagebasis festlegbar ist. Eine solche Ausführungsform hat den besonderen Vorteil, dass im Falle von Funktionsstörungen leichter einzelne Komponenten ausgetauscht werden können.

Bei einer vorteilhaften Ausführungsform des erfindungsgemäßen Schaltungsbauteils weist das Lagermodul eine separate Lagerbuchse zur gelenkigen, insbesondere drehgelenkigen, Aufnahme eines Lagerbolzens auf. Alternativ oder zusätzlich kann vorgesehen sein, dass in das Lagermodul eine Lagerbuchse zur gelenkigen, insbesondere drehgelenkigen, Aufnahme eines Lagerbolzens integriert ist. Es ist im Sinne der vorliegenden Erfindung auch möglich, das Lagermodul derart auszubilden, dass es gleichzeitig als Lagerbuchse fungiert und/oder eine Lagerbuchse bereitstellt.

Wie bereits erwähnt, kann - insbesondere zum Erfüllen weiterer baulicher Randbedingungen - äußerst vorteilhaft vorgesehen sein, dass die separate Baueinheit, insbesondere das Lagermodul der separaten Baueinheit, bezogen auf die Einbaustellung des Schaltungsbauteils in einem Fahrzeug, von oben in die Monatagebasis einsetzbar und/oder von oben an der Montagebasis festlegbar ist.

Es kann auch vorgesehen sein, dass das Schaltungsbauteil, insbesondere die Montagebasis, eine Öffnung, insbesondere einen Schlitz, aufweist, und dass die separate Baueinheit, insbesondere das Lagermodul der separaten Baueinheit, derart in und/oder an der Montagebasis festlegbar ist, dass das Übertragungsmittel in der Zusammenbaustellung in die Öffnung ragt.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Es zeigen:
- Fig. 1: die wesentlichen Teile einer separaten Baueinheit eines erfindungsgemäßen Schaltungsbauteils vor dem Zusammenbau,
- Fig. 2 bis Fig. 3: die einzelnen Herstellschritte zur Herstellung der separaten Baueinheit,
- Fig. 4: die separate Baueinheit vor dem Festlegen an der Montagebasis eines erfindungsgemäßen Schaltungsbauteils und
- Fig. 5: die an der Montagebasis festgelegte separate Baueinheit.

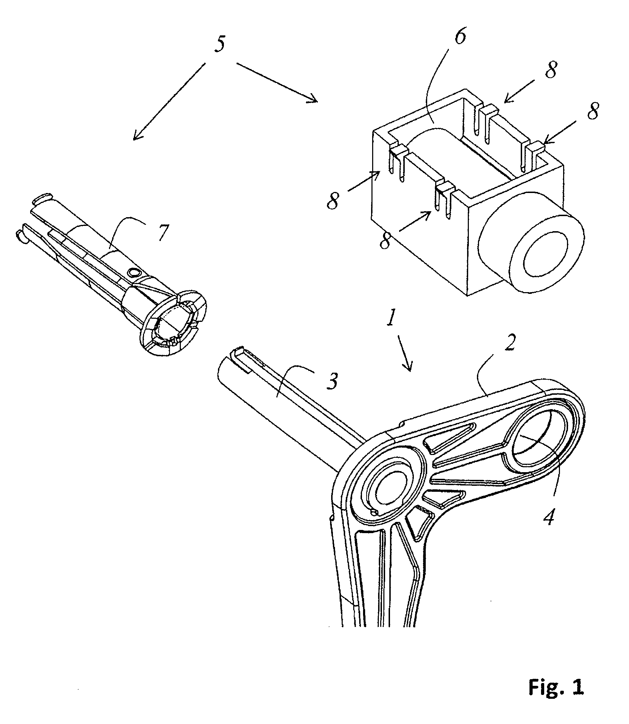

Fig. 1 zeigt die wesentlichen Bauteile der separaten Baueinheit eines erfindungsgemäßen Schaltungsbauteils vor dem Zusammenbau. Die separate Baueinheit weist ein Übertragungsmittel 1 zur direkten und/oder indirekten Übertragung von mechanischen Schaltbefehlen von einer nicht dargestellten Schalthandhabe an ein nicht dargestelltes Getriebe auf. Das Übertragungsmittel ist als Wählwinkel 2 ausgeführt. Der Wählwinkel 2 ist einstückig zusammen mit einem Lagerbolzen 3 hergestellt. Der Lagerbolzen 3 ist senkrecht zum Wählwinkel 2 angeordnet. Der Wählwinkel 2 weist einen Durchbruch 4 auf, der dazu dient, den Wählwinkel direkt oder indirekt mechanisch mit einer Schalthandhabe zu verkoppeln, sodass der Wählwinkel bei einer Linearverschiebung der Schalthandhabe verschwenkt wird.

Die separate Baueinheit weist darüber hinaus ein Lagermodul 5 auf, das ein Lagergehäuse 6 und eine Lagerbuchse 7 beinhaltet. Das Lagergehäuse 6 ist mit Rastnasen 8 zur Festlegung an einer Montagebasis versehen, was weiter unten genauer beschrieben ist.

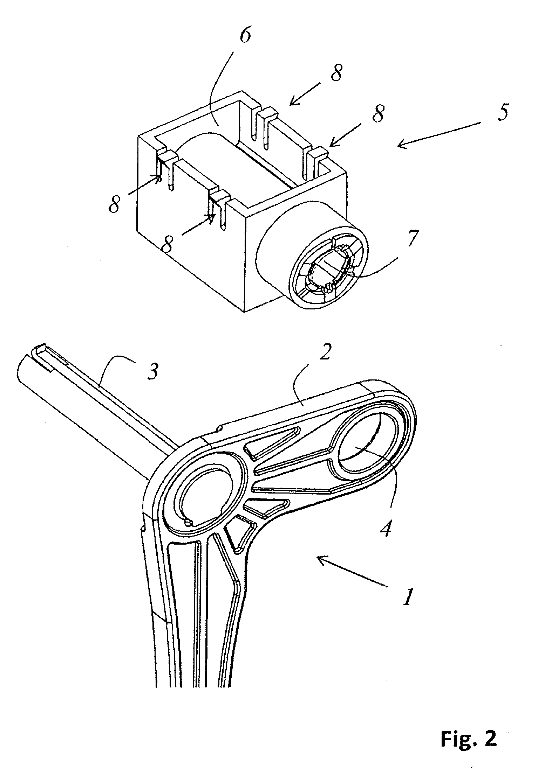

Fig. 2 zeigt das vollständig montierte Lagermodul 5, das im Wesentlichen aus dem Lagergehäuse 6, in das die Lagerbuchse 7 eingesteckt ist, besteht.

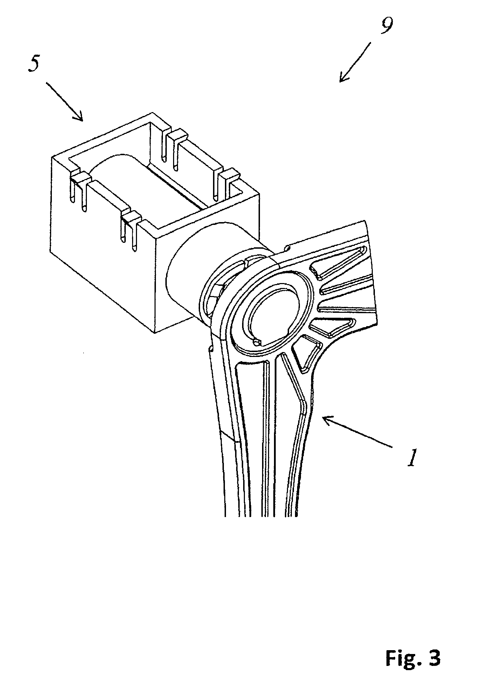

Nach dem Einstecken der Lagerbuchse 7 in das Lagergehäuse 6 erfolgt in einem weiteren Herstellungsschritt das Einfügen des Lagerbolzens 3 in die Lagerbuchse 7 des Lagermoduls 5, was in Fig. 3 dargestellt ist.

Fig. 3 zeigt die komplett montierte separate Baueinheit 9. Das Übertragungsmittel 1, konkret der Wählwinkel 2, ist in dem Lagermodul 5 um die Längserstreckungsachse des Lagerbolzens 3 drehbar gelagert.

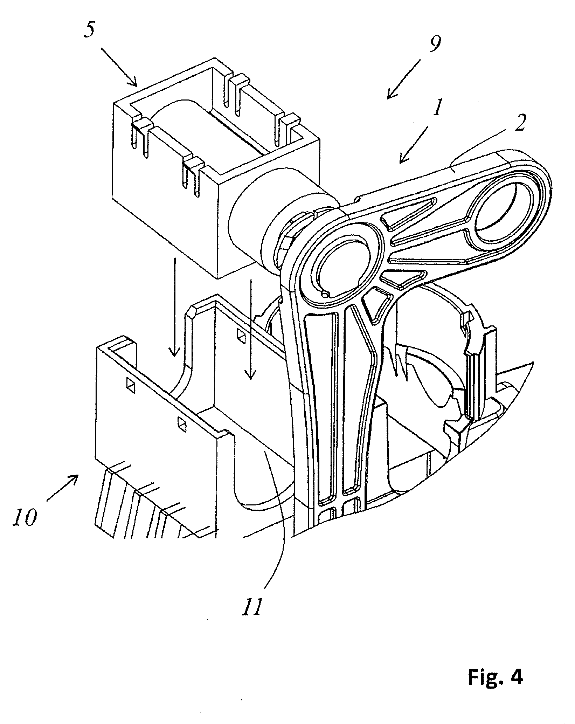

Fig. 4 zeigt den Vorgang des Festlegens der separaten Baueinheit 9 an einer Montagebasis 10. Hierzu wird das Lagermodul 5 der separaten Baueinheit 9 in einer Ausnehmung 11, die Rastöffnungen 12 aufweist, eingeschoben. Hierbei greifen die Rastnasen 8 in die Rastöffnungen 12 und fixieren das Lagermodul 5 sicher in der Ausnehmung 11.

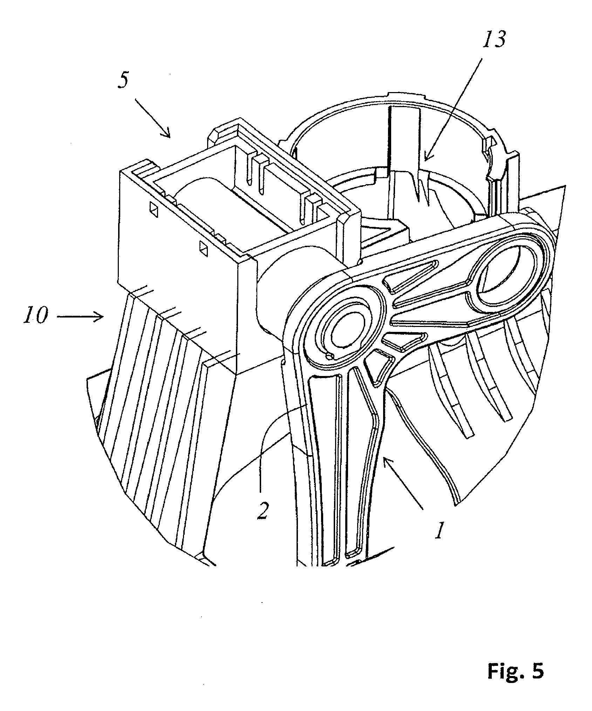

Der Wählwinkel 2 ist in der vollständigen Zusammenbaustellung, die in Fig. 5 gezeigt ist, sowohl relativ zum Lagermodul 5 als auch relativ zu der Montagebasis 10 um die Längserstreckungsachse des Lagerbolzens 3 drehbar gelagert.

Fig. 5 zeigt außerdem eine weitere Aufnahme 13 zur kugelgelenkigen Lagerung einer ― nicht dargestellten Schalthandhabe.

### Bezugszeichenliste

- 1: Übertragungsmittel
- 2: Wählwinkel
- 3: Lagerbolzen
- 4: Durchbruch
- 5: Lagermodul
- 6: Lagergehäuse
- 7: Lagerbuchse
- 8: Rastnasen
- 9: Separate Baueinheit
- 10: Montagebasis
- 11: Aufnahme
- 12: Rastöffnungen
- 13: Weitere Aufnahme

## Patentansprüche

1. Schaltungsbauteil mit einer - insbesondere gehäuseartigen - Montagebasis (10) mit einer Aufnahme (13), in der eine Schalthandhabe gelenkig und/oder verschiebbar gelagert ist, und mit zumindest einem Übertragungsmittel (1) zur direkten oder indirekten Übertragung von mechanischen Schaltbefehlen von einer Schalthandhabe an ein Getriebe, wobei das Übertragungsmittel (1) relativ zu der Montagebasis (10) drehbar gelagert ist, wobei das Übertragungsmittel (1) in einem Lagermodul (5) drehbar gelagert ist, so dass das Lagermodul (5) samt des daran darin drehbar gelagerten Übertragungsmittels (1) eine separate Baueinheit (9) bildet,
**dadurch gekennzeichnet, dass** die separate Baueinheit (9) in einer anderen Aufnahme der Montagebasis (10) festlegbar ist und das Übertragungsmittel (1) als Wählwinkel (*2*) *ausgeführt ist*, *wobei der* Wählwinkel (*2*) einstückig zusammen mit einem Lagerbolzen (3) hergestellt ist und der Lagerbolzen (3) senkrecht zum Wählwinkel (2) angeordnet ist, und wobei das Lagermodul (5) ein Lagergehäuse (6) und eine Lagerbuchse (7) beinhalten und der Wählwinkel in dem Lagermodul (5) um eine Längserstreckungsachse des Lagerbolzens (3) drehbar gelagert ist.

2. Schaltungsbauteil nach Anspruch 1, **dadurch gekennzeichnet, dass** sich der Wählwinkel (2) bei einer Linearverschiebung der Schalthandhabe verschwenkt und/oder dreht.

3. Schaltungsbauteil nach einem der vorhergehenden Ansprüche, **dadurch gekennzeichnet, dass** das Übertragungsmittel (1) samt einem Lagerbolzen (3) als einstückiges Kunststoffteil hergestellt ist

4. Schaltungsbauteil nach einem der vorhergehenden Ansprüche, **dadurch gekennzeichnet, dass** das Übertragungsmittel (1) samt einem Lagerbolzen (3) als einstückiges Spritzgussteil hergestellt ist.

5. Schaltungsbauteil nach einem der vorhergehenden Ansprüche, **dadurch gekennzeichnet, dass** die Lagerbuchse (7) als eine separate Lagerbuchse (7) zur Aufnahme des Lagerbolzens (3) ausgebildet ist oder dass in das Lagermodul (5) die Lagerbuchse (7) zur Aufnahme des Lagerbolzens (3) integriert ist oder dass das Lagermodul (5) als Lagerbuchse (7) zur Aufnahme eines Lagerbolzens (3) fungiert.

## Claims

1. Shifting component with a mounting base (10) which is, in particular, housing-like, with a receptacle (13), in which a gearshift handle is mounted in an articulated and/or displaceable manner, and with at least one transmission means (1) for the direct or indirect transmission of mechanical shifting commands from a gearshift handle to a transmission, the transmission means (1) being mounted such that it can be rotated relative to the mounting base (10), the transmission means (1) being mounted rotatably in a bearing module (5), so that the bearing module (5) together with the transmission means (1) which is mounted rotatably therein forms a separate structural unit (9), **characterized in that** the separate structural unit (9) can be fixed in another receptacle of the mounting base (10) and the transmission means (1) is configured as a selector bracket (2), the selector bracket (2) being produced in one piece together with a bearing pin (3) and the bearing pin (3) being arranged perpendicularly with respect to the selector bracket (2), and the bearing module (5) comprising a bearing housing (6) and a bearing bush (7) and the selector bracket being mounted in the bearing module (5) such that it can be rotated about a longitudinal extent axis of the bearing pin (3).

2. Shifting component according to Claim 1, **characterized in that** the selector bracket (2) pivots and/or rotates during a linear displacement of the gearshift handle.

3. Shifting component according to one of the preceding claims, **characterized in that** the transmission means (1) including a bearing pin (3) is produced as a single-piece plastic part.

4. Shifting component according to one of the preceding claims, **characterized in that** the transmission means (1) including a bearing pin (3) is produced as a single-piece injection-moulded part.

5. Shifting component according to one of the preceding claims, **characterized in that** the bearing bush (7) is configured as a separate bearing bush (7) for receiving the bearing pin (3), or **in that** the bearing bush (7) for receiving the bearing pin (3) is integrated into the bearing module (5), or in that the bearing module (5) acts as a bearing bush (7) for receiving a bearing pin (3).

## Revendications

1. Élément de changement de vitesses comprenant une base de montage (10), notamment de type boîtier, comprenant un logement (13), dans lequel est montée de manière articulée et/ou déplaçable une manette de changement de vitesses, et comprenant au moins un moyen de transfert (1) pour le transfert direct ou indirect d'ordres de changement de vitesses mécaniques d'une manette de changement de vitesses à une boîte de vitesses, le moyen de transfert (1) étant monté de manière rotative par rapport à la base de montage (10), le moyen de transfert (1) étant monté de manière rotative dans un module de palier (5), de telle sorte que le module de palier (5) conjointement avec le moyen de transfert (1) monté de manière rotative dans et contre celui-ci forme une unité structurelle séparée (9),
**caractérisé en ce que** l'unité structurelle séparée (9) peut être fixée dans un autre logement de la base de montage (10) et le moyen de transfert (1) est réalisé sous forme de coude de sélection (2), le coude de sélection (2) étant fabriqué d'une seule pièce avec un axe de palier (3) et l'axe de palier (3) étant disposé perpendiculairement par rapport au coude de sélection (2), et le module de palier (5) présentant un logement de palier (6) et une douille de palier (7) et le coude de sélection étant monté de manière rotative autour d'un axe d'étendue longitudinale de l'axe de palier (3) dans le module de palier (5).

2. Élément de changement de vitesses selon la revendication 1, **caractérisé en ce que** le coude de sélection (2) pivote et/ou tourne lors d'un déplacement linéaire de la manette de changement de vitesses.

3. Élément de changement de vitesses selon l'une quelconque des revendications précédentes, **caractérisé en ce que** le moyen de transfert (1) est fabriqué conjointement avec un axe de palier (3) sous forme de pièce unitaire en plastique.

4. Élément de changement de vitesses selon l'une quelconque des revendications précédentes, **caractérisé en ce que** le moyen de transfert (1) est fabriqué conjointement avec un axe de palier (3) sous forme de pièce unitaire moulée par injection.

5. Élément de changement de vitesses selon l'une quelconque des revendications précédentes, **caractérisé en ce que** la douille de palier (7) est réalisée sous forme de douille de palier séparée (7) pour recevoir l'axe de palier (3) ou **en ce que** la douille de palier (7) est intégrée dans le module de palier (5) pour recevoir l'axe de palier (3) ou **en ce que** le module de palier (5) sert de douille de palier (7) pour recevoir un axe de palier (3).
